Europäisches Patentamt

European Patent Office

Office européen des brevets

(11) Publication number: **0 138 287**
**B1**

(12) **EUROPEAN PATENT SPECIFICATION**

(45) Date of publication of patent specification: **01.08.90**

(51) Int. Cl.⁵: **G 03 B 21/64**

(21) Application number: **84303624.5**

(22) Date of filing: **30.05.84**

(54) Method for making overhead projection transparency and transparency assemblies.

(30) Priority: **01.06.83 NO 831979**

(43) Date of publication of application:
**24.04.85 Bulletin 85/17**

(45) Publication of the grant of the patent:
**01.08.90 Bulletin 90/31**

(84) Designated Contracting States:
**AT BE CH DE FR GB IT LI LU NL SE**

(56) References cited:
**DE-A-2 901 549**
**DE-A-2 907 154**
**DE-U-7 132 640**
**US-A-3 238 655**
**US-A-3 281 977**
**US-A-3 814 518**
**US-A-3 924 879**

(73) Proprietor: **MOORE BUSINESS FORMS, INC.**
**300 Lang Boulevard**
**Grand Island New York 14072-1697 (US)**

(72) Inventor: **Stahl, Torbjorn**
**Rudhogsgt. 44**
**S-121 31 Malmo (SE)**
Inventor: **Hektoen, Per**
**Otto Rugesv. 94A**
**N-1345 Osteras (NO)**
Inventor: **Karlsen, Oystein**
**Erlendsvei 42**
**Oslo 6 (NO)**

(74) Representative: **Townsend, Derek Thomas et al**
**Spence & Townsend Mill House Wandle Road**
**Beddington**
**Croydon Surrey CR0 4SD (GB)**

Courier Press, Leamington Spa, England.

## Description

The present invention relates to a method for making overhead projection transparancies, and to an overhead projection transparency assembly.

Prior art overhead projection transparancies are normally made in the form of a photocopy transparency from a master which is placed on the glass plate of the photocopying machine.

Before feeding the transparency through the photocopying machine, the transparency is either provided with strips of non-glossy material in order to suit the gripping mechanisms of the photocopying machine or attached to a paper backing serving as a support for the transparency and providing engagement with the feeding mechanism of the photocopying machine. Unless the photocopying machine is of the expensive multi-colour type, such transparencies normally provide the information on the transparency in one colour only, conventionally black.

This one colour representation on the transparency required in several cases further treatment of the transparencies with colours from specially made pens in order to colour diagrams etc. This is quite often a tedious and complicated task requiring utmost care in order to obtain a satisfactory result. One major disadvantage when applying colour onto the transparency, is that the transparency has a very glossy surface, occasionally with an oily like coat. Furthermore, coloured copies made on transparencies tend to be rubbed off easily.

It is therefore the primary object of the present invention to simplify the making of overhead projection transparencies, in particular such transparencies requiring multi-colour information to be represented thereon.

From the prior art it is known to locate identity cards between two plastic films in order to avoid the information on the identity card to be tampered with. The present invention aims to carry this technique further in order to obtain an overhead projection transparency.

It is known from German Gebrauchsmuster No. 7132640 to provide a sheet with a pair of pockets for enclosures.

From the German Offenlegungsschrift No. 2907154 it is known to provide a continuous stationery assembly capable of receiving typewritten information and of being divided into binder lengths and folded to provide a binder.

From the German Offenlegungsschrift No. 2901549 it is known to provide a continuous stationery correspondence assembly including a series of letter sheets applied to a continuous backing web.

U.S. Specification No. 3281977 describes a Transparency Holder for holding transparencies on the lighted stage of a projector and U.S. Specification No. 3238655 describes a Transparency Jacket for storing microfilm images having top and bottom transparent panels with spacing means to define channels and with microfilm strips inserted into the channels.

U.S. Specification No. 3814518 describes a film mount assembly for making exposures and other prints of a film and U.S. Specification No. 3924879 describes a film transparency display and for use with overhead projectors which include a carrier sheet and a backing sheet to enable transparency films to be served to the carrier sheet without adhesive.

Suitable transparent plastics films are commercially available, e.g. in the form of polyethylene coated mylar film, one face of which is smooth and glossy and the other being non-glossy and being suitable for writing thereon or printing thereon.

Thus, according to the invention the method in using an assembly comprising a first web (1) of a thin transparent plastic film being attached on a second web (2) of paper, along one longitudinal edge thereby by means of a line of adhesive (3), the upper face of the first web (1) having a writable/printable surface being heat weldable and the lower face thereof having a surface allowing the projection of writing or printing information (14), (for example diagrams or text to be displayed by overhead projection), in writing or printing on a first section (A) of the writable/printable surface while leaving a second section (B) of the writable/printable surface blank, removing the second web (2) or parts (5) thereof from the first web (1), folding the first web (1) and a possible remainder (6) of the second web (2) such that the writable/printable surfaces of the said two sections (A, B) face each other, and feeding the folded assembly of the first web (1) and the possible remainder (6) of the second web (2) through a heat sealing means to weld the said two sections (A, B) together to make a said overhead transparency.

Also according to the invention an overhead transparency assembly comprises a first web (1) of a thin transparent plastics film secured onto a second web (2) of paper along a longitudinal side edge by a longitudinal line (3) of adhesive, the first web (1) having an upper face with a writable/printable surface being capable of receiving writing or printing information, (for example diagrams or text capable or being displayed by over head projection and a lower face having a non writable/non printable surface characterised in that the first web (1) is of a heat weldable material and has a longitudinal line of perforations (7, 13) to separate both webs from each other and a transverse fold line (16).

Thus, the present invention makes it possible to print out overhead projection transparencies directly on a conventional printer or a colour printer.

The vast growth in the field of microcomputers with the options for colourgraphics on a displayscreen have led to an increased use of colourprinters in order to produce in due course from a paper master overhead projection transparencies by means of a said multi-colour photocopying machine.

The present method for making an overhead projection transparency, e.g. from a continuous assembly of said two webs, will therefore substantially simplify and encourage the making of the transparencies having graphs or multicolour information thereon.

Further features of the present invention will appear from the subsequent claims as well as from the description with reference to the attached drawings wherein:—

Fig. 1 is a top plan view of the first and second webs according to the invention.

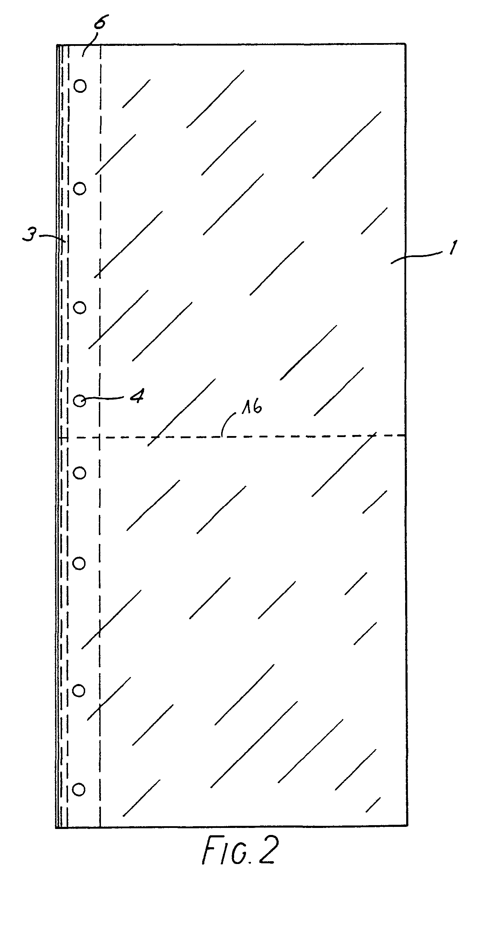

Fig. 2 is a plan view of the first web together with a remainder of the second web.

Fig. 3 illustrates in cross-section the two webs of Fig. 1 in a schematic form.

Fig. 4 is a schematic cross-section of the view shown in Fig. 2.

Fig. 5 illustrates the assembly of the first web and the possible remainder of the second web before heat welding the two writable surfaces to each other.

Fig. 6 illustrates the completed transparency.

Fig. 7 illustrates the said assembly of Fig. 5 before being fed into a heat welding apparatus.

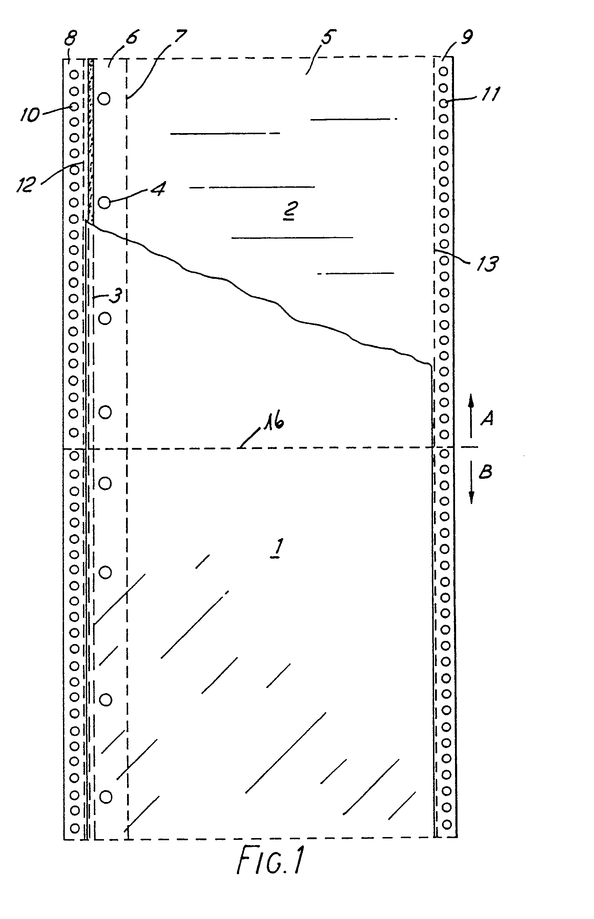

In Fig. 1 there is provided a first web 1 of thin transparent plastic film, on its upper side having a non-glossy and writable/printable surface and a lower face having a glossy surface and facing the second web 2, said second web being made from paper. The first web is attached to the second web by means of a line of adhesive 3 along one longitudinal edge of said first web, as also clearly indicated in Fig. 3. The second web and possibly the first web 1 may be provided with holes 4 to enable the completed transparency to be easily inserted into a binder.

In general, the second web 2 may be comprised of a major portion 5 and a strip-like portion 6 to which the first web is attached. The portions 5 and 6 may be separable by means of a line of perforations 7. In the embodiment shown in Fig. 1, the second web has also marginal edges 8 and 9 having feeding holes 10 and 11 to engage the feeding mechanism of a dataprinter. These marginal edges 8 and 9 are removable in conventional manner from the second web along lines of perforations 12 and 13, respectively.

It is thus understood that the present invention may be applicable to the two section version shown in Fig. 1 divided by a transverse fold line 16 or be made as a continuous form to be suitable for data-printers.

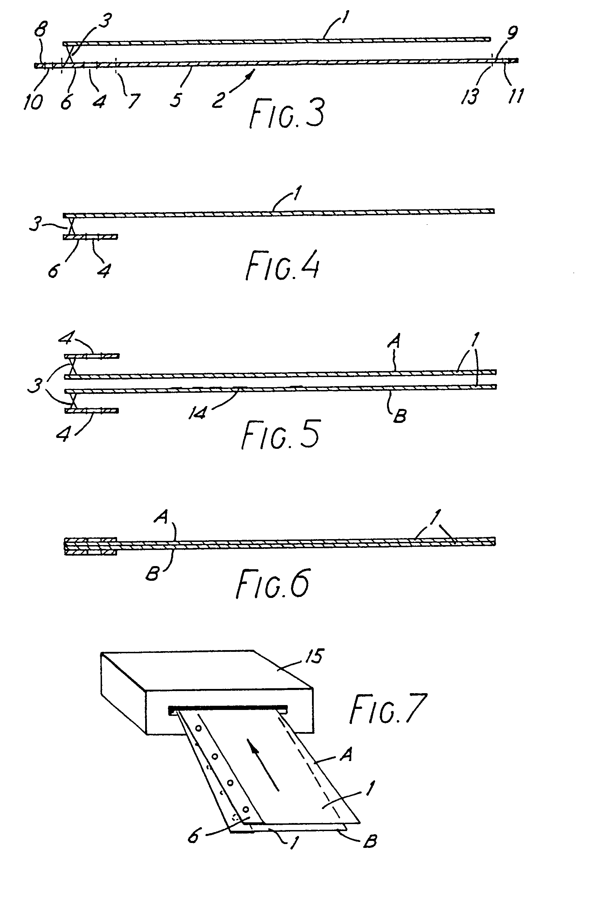

Information is printed by means of a dataprinter or a data-drawing machine capable of multi-colour printing. The information is printed either on section A or on section B, e.g. as shown in Fig. 1 and as symbolically indicated by the reference numeral 14 Fig. 5.

Once printing on one of the sections of the film has been made, the marginal edges of the web 2 are removed together with the removal of the portion 5 of the web 2. Thereafter the first web 1 together with the remainder 6 of the second web 2 are folded about the line 16 as clearly indicated in Fig. 5 and heat welded together through a heat welding apparatus 15, as clearly indicated in Fig. 7.

It is to be understood that the present invention by no means is limited to the embodiment as shown in Fig. 5, since the present two webs may be provided in sets each containing the said two sections A and B and without any marginal strips 8 and 9. In this version, information may be provided on the film 1 by conventional printing technique or in a multi-colour drawing machine not requiring the said marginal strips 8 and 9.

**Claims**

1. A method for making sealed overhead projection transparencies, characterised in using an assembly comprising a first web (1) of a thin transparent plastic film being attached on a second web (2) of paper, along one longitudinal edge thereof by means of a line of adhesive (3), the upper face of the first web (1) having a writable/printable surface being heat weldable and the lower face thereof having a surface allowing the projection of writing or printing information (14), (for example diagrams or text to be displayed by overhead projection), in writing or printing on a first section (A) of the writable/printable surface while leaving a second section (B) of the writable/printable surface blank, removing the second web (2) or parts (5) thereof from the first web (1), folding the first web (1) and a possible remainder (6) of the second web (2) such that the writable/printable surfaces of the said two sections (A, B) face each other, and feeding the folded assembly of the first web (1) and the possible remainder (6) of the second web (2) through a heat sealing means to weld the said two sections (A, B) together to make a said overhead transparency.

2. A method according to claim 1, characterised in that the information (14) is provided by a multi-colour writing or printing.

3. A method according to claim 1 or claim 2, characterised in that first and second webs (1, 2) are made as a continuous form, the second web having at least one marginal strip (8, 9) with feeding holes (10, 11) for engaging the feeding mechanism of a dataprinter or a data drawing machine.

4. A method according to any one of the preceding claims wherein the first and second sections (A, B) are spaced in the longitudinal direction of the webs (1, 2).

5. An overhead projection transparency assembly, for use in a method as claimed in any one of claims 1 to 4, comprising a first web (1) of a thin transparent plastics film secured onto a second web (2) of paper along a longitudinal side edge by a longitudinal line (3) of adhesive, the first web (1) having an upper face with a writable/printable surface to separate both webs from each other being capable of receiving writing or printing information, (for example diagrams or text capable of being displayed by over head projection and a lower face having a non writable/non printable surface characterised in that the first web (1) is of a heat weldable material and has a longitudinal line of perforations (7, 13) to separate both webs from each other and a transverse fold line (16).

**Patentansprüche**

1. Verfahren zur Fabrikation von versiegelten Transparentfolien für Overhead-Projektion, dadurch gekennzeichnet, daß ein Satz mit einer ersten Bahn (1) aus einem dünnen durchsichtigen Film aus Kunststoff benutzt wird, der an einer zweiten Bahn (2) aus Papier an einem längsgerichteten Rand derselben mittels einer Klebstofflinie (3) befestigt ist, wobei die eine beschriftbare/bedruckbare Oberfläche aufweisende obere Seite der ersten Bahn (1) heißschweißbar ist und ihre untere Seite eine die Projektion von geschriebener oder gedruckter Information (14) z.B. von Diagrammen oder von Text, die/der durch Overhead-Projektion zur Betrachtung dargeboten werden soll(en)) durch Beschriften oder Bedrukken eines ersten Abschnitts (A) der beschriftbaren/bedruckbaren Oberfläche ermöglicht, wogen ein zweiter Abschnitt (B) der beschriftbaren/bedruckbaren Oberfläche leer bleibt, die zweite Bahn (2) oder Teile (5) von ihr von der ersten Bahn (1) abgenommen wird bzw. werden, die esrste Bahn (1) und ein möglicher Restabschnitt (6) der zweiten Bahn (2) so gefaltet werden, daß die beschriftbaren/bedruckbaren Oberflächen der beiden Abschnitte (A, B) gegeneinander weisen, und der gefaltete Satz aus der ersten Bahn (1) und dem möglichen Restabschnitt (6) der zweiten Bahn (2) durch eine Heißsievorrichtung hindurchtransportiert wird, derart, daß die beiden Abschnitte (A, B), zu einer Transparentfolie für Overhead-Projektion miteinander verschweißt werden.

2. Verfahren nach Anspruch 1, dadurch gekennzeichnet, daß die Information (14) durch Mehrfarben-Beschriftung oder -Druck erzeugt wird.

3. Verfahren nach Anspruch 1 oder 2, dadurch gekennzeichnet, daß erste und zweite Bahnen (1, 2) als Endlos-Formular hergestellt werden, wobei die zweite Bahn wenigstens einen Randstreifen (8, 9) mit Tansportlöchern (10, 11) zum Eingriff mit dem Transportmechanismus eines Datendruckers oder einer Datenzeichenmaschine aufweist.

4. Verfahren nach einem der vorhergehenden ansprüche, bei dem die ersten und zweiten Abschnitte (A, B) in Längsrichtung der Bahnen (1, 2) beabstandet sind.

5. Transparentfolien-Satz für Overhead-Projektion zur Verwendung in einem Verfahren nach einem der Ansprüche 1 bis 4, mit einer ersten Bahn (1) aus einem dünnen durchsichtigen Film aus Kunststoff, der an einem längsgerichteten Seitenrand durch eine längsrichtete Klebstofflinie (3) an einer zweiten Bahn (2) aus Papier festgemacht ist, wobei die erste Bahn (1) eine obere Seite mit einer beschriftbaren/bedruckbaren Oberfläche zur Aufnahme von geschriebener oder gedruckter Information (z.B. Diagramme oder Text, die bzw. der durch Overhead-Projektion vorführbar sind bzw. ist) und eine untere Seite mit einer nicht beschriftbaren/nicht bedruckbaren Oberfläche aufweist, dadurch gekennzeichnet, daß die erste Bahn (1) aus einem heißschweißbaren Werkstoff ist und eine längsgerichtete Linie Performierungen (7, 13) zum Trennen der beiden Bahnen voneinander und eine quergerichtete Falzlinie (16) aufweist.

**Revendications**

1. Procédé pour fabriquer des transparents fermés de rétro-projection, caractérisé en ce qu'on utilise un ensemble comprenant une première bande (1) d'une mince pellicule de matière plastique transparente fixée sur une seconde bande (2) de papier, le long d'un bord longitudinal de celle-ci au moyen d'une ligne (3) d'adhésif, la face supérieure de la première bande (1) ayant une surface apte à recevoir une écriture ou une impression et pouvant être soudée à chaud et la face inférieure ayant une surface permettant la projection d'une information écrite ou imprimée (14), (par exemple des diagrammes ou un texte devant être affichés par rétro-projection), on écrit ou on imprime sur une première section (A) de la surface apte à récevoir une écriture ou une impression tout en laissant en blanc une seconde section (B) de ladite surface apte à recevoir une écriture ou une impression, on retire la second bande (2), ou des parties (5) de celle-ci, de la première bande (1), on plie la première bande (1) et un reste éventuel (6) de la seconde bande (2) de manière que les surfaces desdites deux sections (A, B) aptes à recevoir une écriture ou une impression se fassent face l'une l'autre, et on amène l'ensemble plié formé de la première bande (1) et du reste éventuel (6) de la seconde bande (2) dans un dispositif de soudage à chaud pour souder ensemble lesdites deux sections (A, B) afin de réaliser ledit transparent de rétro-projection.

2. Procédé suivant la revendication 1, caractérisé en ce que l'information (14) est fournie par écriture ou impression en plusieurs couleurs.

3. Procédé suivant la revendication 1 ou 2, caractérisé en ce que la première et la seconde bande (1, 2) sont fabriquées sous forme continue, la seconde bande ayant au moins une bande marginale (8, 9) avec des trous d'entraînement (10, 11) pour coopérer avec le mécanisme d'alimentation d'une imprimante de données ou d'une machine à tracer des données.

4. Procédé suivant l'une quelconque des revendications précédentes, dans lequel la première et la seconde section (A, B) sont espacées dans le sens longitudinal des bandes (1, 2).

5. Ensemble de transparent pour rétro-projection, destiné à être utilisé dans un procédé tel que défini suivant l'une quelconque des revendications 1 à 4, comprenant une première bande (1) d'une mince pellicule en matière plastique transparente fixée sur une seconde bande (2) de papier le long d'un bord latéral longitudinal par une ligne longitudinale d'adhésif (3), la première bande (1) ayant une face supérieure avec une surface apte à recevoir une information écrite ou imprimée (par exemple des diagrammes ou un texte pouvant être affiché par rétro-projection) et une face inférieure ayant une surface inapte à recevoir une écriture ou une impression, caractérisé en ce que la première bande (1) est en un matériau soudable à chaud et présente une ligne longitudinale de perforations (7, 13) pour séparer les deux bandes l'une de l'autre et une ligne de pliage transversale (16).

FIG.1

FIG. 2

FIG.3

FIG.4

FIG.5

FIG.6

FIG.7